# EUROPEAN PATENT APPLICATION

(11) **EP 3 171 285 A1**
(43) Date of publication of application: **24.05.2017**
(21) Application number: 16199364.7
(22) Date of filing: 17.11.2016
(51) Int. Cl.: G06F 17/30

(54) **METHOD AND DEVICE FOR MINING INFORMATION TEMPLATE**

(30) Priority: 17.11.2015 CN 201510791533
(71) Applicant: Xiaomi Inc., Beijing 100085 (CN)
(72) Inventor: WANG, Pingze, Haidian District, Beijing 100085 (CN); ZHANG, Tao, Haidian District, Beijing 100085 (CN); CHEN, Zhijun, Haidian District, Beijing 100085 (CN)
(74) Representative: West, Jonathan David

(57) **Abstract**

The present disclosure relates to a method and a device for mining an information template, and belongs to technical field of information. The method includes: acquiring (101, 201) a modeling information set, the modeling information set including multiple modeling information; respectively encrypting (102, 202) numerical information included in the multiple modeling information to obtain multiple encrypted information; and clustering (103, 203) the multiple encrypted information to obtain at least one information template. According to the present disclosure, the information template is mined through studying multiple modeling information, and the numerical information included in the modeling information is encrypted during the template mining process, which prevents user privacy from being leaked by the mined template, so that a more scientific method for mining an information template is provided.

## Description

### TECHNICAL FIELD

The present disclosure relates to technical field of information, and more particularly, to a method and a device for mining an information template.

### BACKGROUND

In modem life, users will receive lots of notification information sent by such manners as short message, email and instant message every day. While studying this information, it is found that this information usually has similar text frameworks, and information templates mined on the basis of these text frameworks are very important to such aspects like improving user experience, and promoting natural language processing technologies.

Frequent sequence mining is a common method for mining an information template at present, which mines the information templates from mass information through a preset threshold. During practical applications, if the frequency of certain information is higher than the preset threshold, then the information is used as the information template.

### SUMMARY

The present disclosure provides a method and a device for mining an information template.

According to a first aspect of embodiments of the present disclosure, there is provided a method for mining an information template, including: acquiring a modeling information set, the modeling information set including multiple modeling information; respectively encrypting numerical information included in the multiple modeling information to obtain multiple encrypted information; and clustering the multiple encrypted information to obtain at least one information template.

According to a second aspect of embodiments of the present disclosure, there is provided a device for mining an information template, including: an acquisition module configured to acquire a modeling information set, the modeling information set including multiple modeling information; an encryption module configured to respectively encrypt numerical information included in the multiple modeling information to obtain multiple encrypted information; and a clustering module configured to cluster the multiple encrypted information to obtain at least one information template.

According to a third aspect of embodiments of the present disclosure, there is provided a device for mining an information template, including: a processor; and a memory for storing instructions executable by the processor; wherein the processor is configured to: acquire a modeling information set, the modeling information set including multiple modeling information; respectively encrypt numerical information included in the multiple modeling information to obtain multiple encrypted information; and cluster the multiple encrypted information to obtain at least one information template.

The present invention also provides a computer program, which when executed on a processor of a server, performs the above method.

The technical solutions provided by embodiments of the present disclosure have the following beneficial effects: the information template is mined through studying the multiple modeling information, and the numerical information included in the modeling information is encrypted during the template mining process, which prevents user privacy from being leaked by the mined template, so that a more scientific method for mining an information template is provided.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for mining an information template, according to an exemplary embodiment.
Fig. 2 is a flow chart of a method for mining an information template, according to an exemplary embodiment.
Fig. 3 is a structure diagram illustrating a device for mining an information template, according to an exemplary embodiment.
Fig. 4 is a block diagram illustrating a device for mining an information template, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

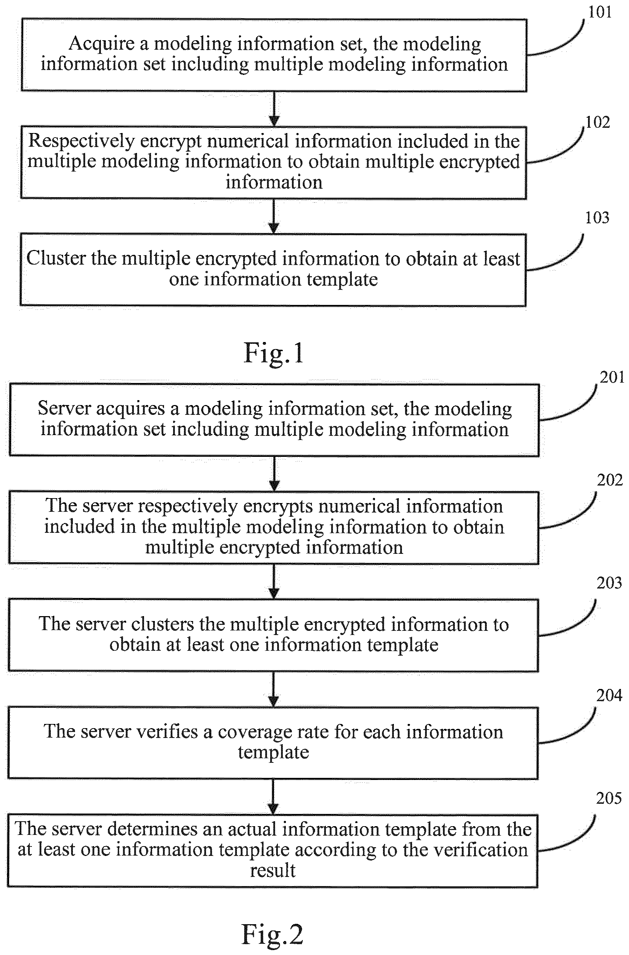

Fig. 1 is a flow chart of a method for mining an information template, according to an exemplary embodiment. As shown in Fig. 1, the method for mining an information template is used in a server, including the following steps.
In step 101, a modeling information set is acquired, the modeling information set including multiple modeling information.
In step 102, numerical information included in the multiple modeling information is encrypted respectively to obtain multiple encrypted information.
In step 103, the multiple encrypted information is clustered to obtain at least one information template.

According to the method provided by the embodiment of the present disclosure, the information template is mined (extracted or excavated) through studying the multiple modeling information, and the numerical information included in the modeling information is encrypted during the process of mining the template, which prevents user privacy from being disclosed by the mined template, so that a more scientific method for mining an information template is provided.

Optionally, the acquiring the modeling information set includes: acquiring multiple information to be processed, each information to be processed at least including a sending end identity; dividing the multiple information to be processed into different information sets, the information to be processed in each information set having the same sending end identity; acquiring a first preset number of information to be processed from the corresponding information set according to the sending end identity of any information to be processed; and composing the first preset number of information to be processed into the modeling information set.

Optionally, the respectively encrypting the numerical information included in the multiple modeling information to obtain the multiple encrypted information includes: with regard to any modeling information, acquiring a territory identity of the modeling information according to a receiving end identity of the modeling information; encrypting the receiving end identity of the modeling information to obtain a first feature code of the modeling information; encrypting the numerical information in the modeling information according to a type of the numerical information included in the modeling information to obtain a second feature code of the modeling information; and composing the territory identity, the first feature code, the second feature code and receiving time of the modeling information into one encrypted information.

Optionally, the clustering the multiple encrypted information to obtain the at least one information template includes: respectively consolidating the encrypted information satisfying a first consolidation condition in the multiple encrypted information to obtain multiple first consolidated information; respectively consolidating the encrypted information satisfying a second consolidation condition in the multiple first consolidated information to obtain multiple second consolidated information; and clustering the multiple second consolidated information to obtain at least one information template.

Optionally, the respectively consolidating the encrypted information satisfying the first consolidation condition in the multiple encrypted information to obtain the multiple first consolidated information includes: acquiring multiple first target encrypted information blocks from the multiple encrypted information, the encrypted information in each first target encrypted information block having the same territory identity, first feature code and second feature code; sequencing the encrypted information in any first target encrypted information block according to the receiving time in a late-to-early order; and saving the encrypted information in the first target encrypted information block having the latest, or most recent, receiving time and deleting remaining encrypted information in the first target encrypted information block to obtain one first consolidated information.

Optionally, the respectively consolidating the encrypted information satisfying the second consolidation condition in the multiple first consolidated information to obtain the multiple second consolidated information includes: acquiring multiple second target encrypted information blocks from the multiple first consolidated information, the first consolidated information in each second target encrypted information block having the same territory identity and second feature code; with regard to any second target encrypted information block, acquiring the number of the first consolidated information in the second target encrypted information block and the latest receiving time of the first consolidated information in the second target encrypted information block; and composing the territory identity of the second target encrypted information block, the number of the first consolidated information in the second target information block, the second feature code of the second target encrypted information block and the latest receiving time of the first consolidated information in the second target encrypted information block into one second consolidated information.

Optionally, the clustering the multiple second consolidated information to obtain at least one information template includes: dividing the multiple second consolidated information into multiple third target encrypted information blocks, the second consolidated information in each third target encrypted information block having the same territory identity; with regard to any third target encrypted information block, acquiring the number of the first consolidated information consolidated by any second consolidated information in the third target encrypted information block, and when the number of the first consolidated information consolidated by the second consolidated information is greater than a first threshold, composing information contents corresponding to the second consolidated information, the number of the first consolidated information consolidated by the second consolidated information and the latest receiving time of the third target encrypted information block into one entry; and consolidating multiple entries having the same information contents in the third target encrypted information block to obtain one information template, the number of the applicable encrypted information of the information template being a sum of the number of the encrypted information consolidated by the multiple entries, and the receiving time of the information template being the latest receiving time of the multiple entries.

Optionally, the method, after the clustering the multiple encrypted information to obtain at least one information template, further includes: verifying a coverage rate of each information template; and determining an actual information template from the at least one information template according to the verification result.
Optionally, the verifying the coverage rate of each information template includes: acquiring a test information set, the test information set including multiple test information; respectively processing the multiple test information to obtain multiple first test information blocks; and verifying the coverage rate of each information template according to the multiple first test information blocks.

Optionally, the acquiring the test information set includes: acquiring a second preset number of information to be processed from the rest information to be processed in the information set corresponding to the sending end identity of the information to be processed to obtain the test information set.

Optionally, the respectively processing the multiple test information to obtain the multiple first test information blocks includes: respectively encrypting the multiple test information to obtain multiple encrypted test information; respectively consolidating the encrypted test information satisfying a third consolidation condition in the multiple encrypted test information to obtain multiple third consolidated information; and dividing the multiple third consolidated information into multiple first test information blocks, the third consolidated information in each first test information block having the same territory identity.

Optionally, the encrypting the multiple test information to obtain the multiple encrypted test information includes: with regard to any test information, acquiring a territory identity of the test information according to a receiving end identity of the test information; encrypting the receiving end identity of the test information to obtain a first feature code of the test information; and composing the territory identity of the test information, the first feature code and the information contents of the test information into one encrypted test information.

Optionally, the consolidating the multiple encrypted test information to obtain the multiple third consolidated information includes: acquiring multiple second test information blocks from the multiple encrypted test information, the encrypted test information in each second test information block having the same territory identity and information contents; acquiring the number of the encrypted test information in any second test information block; and composing the territory identity of the second test information block, the number of the encrypted test information in the second test information block and the information contents of the second test information block into one consolidated test information.

Optionally, the verifying the coverage rate of each information template according to the multiple first test information blocks includes: with regard to any information template, acquiring the number of the information matched with the information template in each first test information block; and if the number of the information in the information template matched with any first test information block is greater than a second threshold, acquiring a ratio between the number of the matched information and the number of the test information included in the first test information block.

Optionally, the determining the actual information template from the at least one information template according to the verification result includes: if the ratio between the number of the matched information and the number of the test information included in the first test information block is within a preset range, determining the information template to be the actual information template.

All the above-mentioned optional technical solutions may form an optional embodiment of the present disclosure by using any combination of the above embodiments, which will not be elaborated one by one herein.

Fig. 2 is a flow chart of a method for mining an information template, according to an exemplary embodiment. As shown in Fig. 2, the method for mining an information template is used in a server, including the following steps.

In step 201, a server acquires a modeling information set, the modeling information set including multiple modeling information.

In modem life, users will receive notification information sent by service providers through such manners as short message, email and instant message in every day. While sending this information, generally, a uniform information template will be employed and related information of the users is filled in by servers of the service providers, and then the information is automatically sent to each user. Through studying this information, the information templates applied for this information may be mined. These information templates not only can help the users understand latest news of the service providers and improve the experience effects, but also can promote the development of natural language processing technologies.

It should be illustrated that because different types of information relate to different service providers, and the information contents sent by the servers of different service providers are usually different, in order to conduct a targeted template mining and improve the accuracy of the mined information templates, the method provided by the embodiment preferably collects information of the same type while mining the information templates, so as to mine the information template from this type of information.

For example, the server may collect various short messages sent to the users by the servers of such service providers like China Mobile, China Telecom and China Unicom, so as to mine the information template from the collected short messages. The server may also collect instant messages sent to the users by different instant application servers, so as to mine the information template from the collected instant messages. The server may also collect the notification mails sent to the users by different mail servers, so as to mine the information template from the collected notification mails.

The collected information to be processed is large in quantity, and it will be very slow to mine the information template if mining the information template according to all the collected information to be processed, thereby the server may acquire a modeling information set according to the collected information to be processed. The modeling information set includes a plurality of modeling information, the modeling information being information to be processed for mining the information template. Exemplarily, the following steps 2011∼2014 may be employed when the server acquires the modeling information set.

In step 2011, the server acquires multiple information to be processed, each information to be processed at least including a sending end identity.

The server, while acquiring the multiple information to be processed, may collect information sent to the users from the server of each service provider, so as to take the collected information as the acquired multiple information to be processed. In an embodiment, each information to be processed may at least include a sending end identity, a receiving end identity, an information receiving time, or the like. If the information to be processed is a short message, then the sending end identity included in each information to be processed may be a number of a sender, and the receiving end identity may be a number of a receiver. If the information to be processed is a mail, then the sending end identity included in each information to be processed may be a mailbox corresponding to a mail server, and the receiving end identity may be a mailbox of the user. If the information to be processed is an instant message, then the sending end identity included in each information to be processed may be an instant communication number corresponding to an instant application server, and the receiving end identity may be an instant communication number of the user, or the like.

Usually, the information to be processed collected by the server may possibly be sent to the users by the server of each service provider at different time, and some of this information is meaningless for the user because the information is too old, and the information template mined on the basis of this information will certainly lose due values thereof. Therefore, in order to ensure that the mined information templates have timeliness, the server may preset a designated time after acquiring multiple information to be processed, and primarily screen the information to be processed according to the designated time, so as to save the information to be processed having a receiving time later than the designated time, and delete the information to be processed having a receiving time earlier than the designated time.

In step 2012, the server divides the multiple information to be processed into different information sets, the information to be processed in each information set having the same sending end identity.

The server divides the information to be processed having the same sending end identity into one information set according to the sending end identity, the information to be processed in each information set having the same sending end identity. By dividing the multiple information to be processed, each information set and the sending end identity will be in a one to one correspondence. For example, the information to be processed having a sending end identity of 10086 may be divided into an information set A, and the information to be processed having a sending end identity of 10011 may be divided into an information set *B,* or the like.

In step 2013, the server acquires a first preset number of information to be processed from the corresponding information set according to the sending end identity of any information to be processed.

In the present embodiment, the information set and the sending end identity are in a one to one correspondence, and the server may acquire the corresponding information set according to any sending end identity. Because each information set includes a large number of information to be processed, the operating complexity is high if mining the information template according to all the information to be processed. Thereby, in order to improve the speed of mining the information template, the method provided by the present embodiment may acquire partial information to be processed from the acquired information set to form one modeling information set. Taking selecting a first preset number of information to be processed as an example, the first preset number may be 1000, 2000, 3000 or the like, and the first preset number will not be particularly defined in the embodiment.

In step 2014, the server composes the first preset number of information to be processed into a modeling information set.

Based on the acquired first preset number of information to be processed, the server may compose the first preset number of information to be processed into the modeling information set.

It should be illustrated that because the embodiment relates to various information to be processed, to facilitate distinguishing various information to be processed, the information to be processed may be divided into modeling information and test information in the present embodiment according to different usages of the information to be processed. The modeling information is mainly used for mining the information template, and the test information is mainly used for verifying the mined information templates.

In step 202, the server respectively encrypts numerical information included in the multiple modeling information to obtain multiple encrypted information.

Generally, the information received by the user may include some privacy information, for example, a name, a phone number, a date of birth, a banking card No., a member card No., an amount of consumption, a validation code, an order bill No., or the like. In the present embodiment, the name is text privacy information, and the phone number, the date of birth, the banking card No., the member card No., the amount of consumption, the validation code, the order bill No., or the like belong to numerical privacy information which is referred to as numerical information.

The text privacy information is distinctive to the users, and different text privacy information are generally different or not completely identical for different users. With regard to the text information without distinctiveness, for example, texts "dear customers" or the like frequently appeared in the short message, the identity information of the user cannot be speculated according to the information; therefore, the information does not belong to the privacy information. With regard to the text information having distinctiveness, for example, San ZHANG and Si LI or the like, related information like the identity of the user can be speculated through this information. Therefore, in order to prevent the user privacy from being disclosed, the server may select a proper wildcard character to replace this information.

In order to better protect the user privacy, with regard to the numerical information included in the modeling information, the server may encrypt this information using an encryption algorithm to obtain a plurality of encrypted information. The following steps 2021∼2024 may be employed to perform the particular process.

In step 2021, the server, with regard to any modeling information, acquires a territory identity of the modeling information according to a receiving end identity of the modeling information.

Usually, different service providers use different information templates in different positions or regions with respect to different region features. Because the receiving end identity may position the positions or regions of different users, the server may acquire the territory identity of the modeling information according to the receiving end identity of the modeling information. In the present embodiment, the territory identity may be represented by *place,* and the territory identities (*place*) corresponding to different territory positions are different, for instance, the territory identity of Beijing is *"beijing",* and the territory identity of Shanghai is "*shanghai*", or the like.

In step 2022, the server encrypts the receiving end identity of the modeling information to obtain a first feature code of the modeling information.

The server, while encrypting the receiving end identity of the modeling information, may employ a preset encryption algorithm for encryption, the preset encryption algorithm being determined by the server. A cipher text corresponding to the receiving end identity of the modeling information may be acquired through encrypting the receiving end identity of the modeling information using the preset encryption algorithm, the cipher text being called the first feature code. In the present embodiment, the first feature code may be represented by *ciphertext,* the *ciphertext* of different receiving end identities are different, for instance, the *ciphertext* of a receiving end identity 123456 is *a,* and the *ciphertext* of a receiving end identity 258369 is *b,* or the like.

It should be noted that the first feature codes obtained by encrypting different receiving end identities using the preset encryption algorithm are different, and the first feature code corresponding to each receiving end identity is unique; that is, the receiving end identity and the first feature code are in a one to one correspondence.

In step 2023, the server encrypts the numerical information in the modeling information according to a type of the numerical information included in the modeling information to obtain a second feature code of the modeling information.

In the present embodiment, the cipher texts corresponding to different types of numerical information are also different, for example, if the type of the numerical information is a telephone number, then the cipher text corresponding to the numerical information may be <*Phone Number*>; if the type of the numerical information is a date, then the cipher text corresponding to the numerical information may be <*Time*>; and if the type of the second information is a numeral, then the cipher text corresponding to the numerical information may be <*Number*>.

The server, while encrypting the numerical information included in the modeling information, may employ the cipher text corresponding to the type of the numerical information to replace the corresponding numerical information in the modeling information, so as to obtain the second feature code of the modeling information. In the present embodiment, the second feature code may be represented by *contentNew.*

For example, if the type of the numerical information of the modeling information is a telephone number 10086, then the second feature code *<Phone Number>* corresponding to the telephone number is employed to replace 10086, so as to obtain the second feature code *<Phone Number>* of the modeling information.

In step 2024, the server composes the territory identity, the first feature code, the second feature code and the receiving time of the modeling information into one encrypted information.

The server forms the territory identity, the first feature code, the second feature code and the receiving time of the modeling information into one encrypted information. In the present embodiment, the receiving time may be represented by *datetime.* At this moment, the encrypted information may be tetrad information that can be represented by <*place, ciphertext, contentNew, datetime>.*

It should be illustrated that taking the foregoing encrypting any modeling information in the modeling information set for example, the process of encrypting other modeling information is identical to the process of encrypting the modeling information during practical application. Please refer to the foregoing process of encrypting the modeling information for details, and the process will not be elaborated herein.

In order to intuitively show the process of the server conducted on the numerical information included in the multiple modeling information, detailed explanation and illustration will be made hereinafter by taking a short message 1, a short message 2 and a short message 3 as examples.

For example, the short message 1 is: [Bank] Dear Mr/Miss Fei LIU, you have changed your original mobile phone number (tail number 0102) into mobile phone number (tail number 0988) on August 21, 2014, please use the new mobile phone number to transact e-banking business, and please call 95580 in case of any query.

The short message 2 is: [Bank] Dear Mr/Miss Jie ZHANG, you have changed your original mobile phone number (tail number 0209) into mobile phone number (tail number 0898) on July 13, 2014, please use the new mobile phone number to transact e-banking business, and please call 95580 in case of any query.

The short message 3 is: [Bank] Dear Mr/Miss Changjiang WHANG, you have changed your original mobile phone number (tail number 0109) into mobile phone number (tail number 1234) on August 07, 2014, please use the new mobile phone number to transact e-banking business, and please call 95580 in case of any query.

Because the short message 1, the short message 2 and the short message 3 relate to such privacy information of the user as the time, the mobile phone number, the telephone number or the like, in order to protect the privacy of the user, the method provided by the embodiment may be employed to encrypt the numerical information in these short messages, and the following encrypted information may be obtained after the encryption:
encrypted information 1: [Bank] Dear Mr/Miss Fei LIU, you have changed your original mobile phone number (tail number <*Number*>) into mobile phone number (tail number <*Number*>) on *<Time>*, please use the new mobile phone number to transact e-banking business, and please call *<Phone Number>* in case of any query;
encrypted information 2: [Bank] Dear Mr/Miss Jie ZHANG, you have changed your original mobile phone number (tail number <*Number*>) into mobile phone number (tail number <*Number*>) on *<Time>,* please use the new mobile phone number to transact e-banking business, and please call <*Phone Number>* in case of any query; and
encrypted information 3: [Bank] Dear Mr/Miss Changjiang WANG, you have changed your original mobile phone number (tail number *<Number>*) into mobile phone number (tail number *<Number>*) on *<Time>,* please use the new mobile phone number to transact e-banking business, and please call *<Phone Number>* in case of any query.

Moreover, in order to facilitate managing the encrypted information, the server may compose the multiple encrypted information into an encrypted information set. In the present embodiment, the encrypted information set may be represented by *corpus1,* and the *corpus1* includes multiple tetrad encrypted information which may be represented by *<place, ciphertext, contentNew, datetime>.*

In step 203, the server clusters the multiple encrypted information to obtain at least one information template.

In order to reduce the complexity of the process for mining the information templates and improve the efficiency of mining the information templates, the server, based on the obtained multiple encrypted information, may cluster the multiple encrypted information to obtain at least one information template.

In the present embodiment, the process for the server to cluster the multiple encrypted information to obtain at least one information template may be shown in the following steps 2031∼2033.

In step 2031, the server respectively consolidates the encrypted information satisfying a first consolidation condition in the multiple encrypted information to obtain multiple first consolidated information.

The first consolidation condition refers to having the same territory identity, first feature code and second feature code, or the like.

Exemplarily, the process for the server to respectively consolidate the encrypted information satisfying the first consolidation condition in the multiple encrypted information to obtain the multiple first consolidated information may be shown in the following steps 20311∼20313.

In step 20311, the server acquires multiple first target encrypted information blocks from the multiple encrypted information, the encrypted information in each first target encrypted information block having the same territory identity, first feature code and second feature code.

Because each encrypted information may be represented into the tetrad information composed of the territory identity, the first feature code, the second feature code and the receiving time, the server may acquire the encrypted information having the same territory identity, first feature code and second feature code according to the tetrad representation form of each encrypted information, so as to form the encrypted information block having the same territory identity, first feature code and second feature code into the first target encrypted information block.

For example, the server may acquire multiple encrypted information, wherein encrypted information 1 may be *<beijing, a, Number,* 2015/06/01/ 12:00:00>, encrypted information 2 may be *<beijing, a, Number,* 2015/01/04/ 07:00:00>, encrypted information 3 may be *<beijing, a, Number,* 2015/02/01/ 08:30>, encrypted information 4 may be *<tianjin, c, PhoneNumber,* 2015/04/04/ 10:15:00>, encrypted information 5 may be *<tianjin, c, PhoneNumber,* 2015/07/14/ 10:15:00>, and encrypted information 6 may be *<tianjin, c, PhoneNumber,* 2015/07/12/ 06:20:00>. In the present embodiment, the server forms the encrypted information 1, the encrypted information 2 and the encrypted information 3 having the territory identity of *beijing,* the first feature code of *a* and the second feature code of *Number* into one first target encrypted information block. The server forms the encrypted information 4, the encrypted information 5 and the encrypted information 6 having the territory identity of *tianjin,* the first feature code of *c* and the second feature code of *PhoneNumber* into another first target encrypted information block.

In step 20312, the server sorts the encrypted information in any first target encrypted information block according to the receiving time in a descending order (from most recent to least recent).

Taking the encrypted information in any first target encrypted information block for an example, the server may also sort the encrypted information in the first target encrypted information block according to the receiving time in a descending order.

Taking the first target encrypted information block composed of the encrypted information 1, the encrypted information 2 and the encrypted information 3 in the foregoing example as an example, the server sorts the encrypted information according to the receiving time in a descending order to obtain the encrypted information 1, the encrypted information 2 and the encrypted information 3.

In step 20313, the server saves the encrypted information in the first target encrypted information block having the latest receiving time and deletes the remaining encrypted information in the first target encrypted information block, so as to obtain one first consolidated information.

Usually, the information having the same territory identity, first identity code and second identity code refers to notification information having the same information contents sent by a service provider to the same user, and the information is sent by multiple times due to server failures. While mining the information templates, in order to reduce the calculating amount for mining the information templates, the server may save the encrypted information having the latest receiving time in the first target encrypted information block, and delete the remaining encrypted information in the first target encrypted information block. The encrypted information having the latest receiving time is namely the first consolidated information.

For example, the encrypted information 1 in the first target encrypted information block is *<beijing, a, Number,* 2015/06/01/ 12:00:00>, the encrypted information 2 is *<beijing, a, Number,* 2015/01/04/ 07:00:00>, the encrypted information 3 is *<beijing, a, Number,* 2015/02/01/ 08:30>, and the encrypted information 4 is *<tianjin, c, PhoneNumber,* 2015/04/04/ 10:15:00>, then the server may save the encrypted information 1 and delete the encrypted information 2 and the encrypted information 3.

In step 2032, the server respectively consolidates the encrypted information satisfying a second consolidation condition in the multiple first consolidated information to obtain multiple second consolidated information.

In one embodiment, the second consolidation condition refers to having the same territory and second feature code, or the like.

Exemplarily, the process for the server to respectively consolidate the encrypted information satisfying the second consolidation condition in the multiple first consolidated information to obtain the multiple second consolidated information may be shown in the following steps 20321∼30323.

In step 20321, the server acquires multiple second target encrypted information blocks from the multiple first consolidated information, the first consolidated information in each second target encrypted information block having the same territory identity and second feature code.

Because each first consolidated information may be represented by the tetrad information composed of the territory identity, the first feature code, the second feature code and the receiving time, the server may acquire the first consolidated information having the same territory identity and second feature code according to the tetrad representation form of each first consolidated information, so as to form the first consolidated information having the same territory identity and second feature code into the second target encrypted information block.

For example, the server respectively consolidates the encrypted information satisfying the first consolidation condition in the multiple encrypted information to obtain the multiple first encrypted information, wherein the first consolidation condition 1 is *<shanghai, c, Number,* 2015/07/03/ 10:00:00>, the first consolidated information 2 is *<shanghai, a, Number,* 2015/01/08/ 07:00:00>, the first consolidated information 3 is *<beijing, b, PhoneNumber,* 2015/02/05/ 08:30:12>, the first consolidated information 4 is *<shanghai, b, PhoneNumber,* 2014/07/18/ 09:00:02>, the first consolidated information 5 is *<beijing, b, PhoneNumber,* 2015/05/04/ 10:20:00>, and the first consolidated information 6 is *<tianjin, c, PhoneNumber,* 2015/07/12/ 06:20:00>. The server forms the first consolidated information 1 and the first consolidated information 2 having the territory identity of *shanghai* and the second feature code of *Number* into one second target encrypted information block; and the server forms the first consolidated information 3 and the first consolidated information 5 having the territory identity of *beijing* and the second feature code of *PhoneNumber* into one second target encrypted information block.

In step 20322, with regard to any second target encrypted information block, the server acquires the number of the first consolidated information in the second target encrypted information block and the latest receiving time of the first consolidated information in the second target encrypted information block.

In the present embodiment, the number of the first consolidated information in the second target encrypted information block may be 2, 3 or the like, and the number of the first consolidated information in the second target encrypted information blocks will not be specifically defined in the present embodiment. In the present embodiment, the number of the first consolidated information in the second target encrypted information block may be represented by *c1.*

In the present embodiment, the server also sorts the first consolidated information in the second target encrypted information block according to the receiving time from most recent to least recent, and acquires the latest receiving time of the first consolidated information in the second target encrypted information block according to the sorting result. In the present embodiment, the latest receiving time of the first consolidated information in the second target encrypted information block may be represented by *latestdatetime1.*

Taking the foregoing second target encrypted information block composed of the first consolidated information 3 and the first consolidated information 5 as an example, the server may acquire that the number of the first consolidated information in the second target encrypted information block is 2. Because the receiving time of the first consolidated information 3 is <2015/02/05/ 08:30:12>, and the receiving time of the first consolidated information 5 is <2015/05/04/10:20:00>, the server may acquire that the latest receiving time of the first consolidated information in the second target encrypted information block is 2015/05/04/ 10:20:00.

In step 20323, the server forms the territory identity of the second target encrypted information block, the number of the first consolidated information in the second target encrypted information block, the second feature code of the second target encrypted information block and the latest receiving time of the second consolidated information in the second target encrypted information block into one second consolidated information.

In one embodiment, each second consolidated information is tetrad information which may be represented by *<place, c1, contentNew, latestdatetime1>.*

It should be illustrated that the foregoing is explained by consolidating the multiple first consolidated information in one second target encrypted information block. The process of consolidating the multiple first consolidated information in other second target encrypted information block may be referred to the foregoing process of consolidating the multiple first consolidated information in any second target encrypted information block, and will not be elaborated herein.

In order to facilitate managing the multiple second consolidated information, the server also forms the multiple second consolidated information into one set *corpus2.*

In step 2033, the server clusters the multiple second consolidated information to obtain at least one information template.

Although the multiple modeling information in the modeling information set has been consolidated into multiple second consolidated information through the foregoing process, the number of the second consolidated information obtained after consolidating is still too much, and partial second consolidated information among these second consolidated information still has same features. Thereby, the server may cluster the multiple second consolidated information to obtain at least one information template.

Optionally, the following steps 20331~20333 may be employed when the server clusters the multiple second consolidated information to obtain at least one information template.

In step 20331, the server divides the multiple second consolidated information into multiple third target encrypted information blocks, the second consolidated information in each third target encrypted information block having the same territory identity.

Usually, the information contents sent by the service providers to the users are different according to different territory features, and the information templates mined by the server according to different information contents are certainly different. Therefore, in order to conduct a targeted information template mining, the server may divide the multiple second consolidated information into multiple third target encrypted information blocks according to the territory identity of the second consolidated information, the second consolidated information in each third target encrypted information block having the same territory identity.

During specific implementation, the server may divide the set *corpus2* into *n* disjoint subsets according to the territory identity of the second consolidated information included in *corpus2,* for example, *corpus2* (*place1*), *corpus2* (*place2*), *corpus2* (*place3*)*,*..., *corpus2* (*placen*)*.* With regard to any *corpus2* (*placei*)*,* the territory identity corresponding to each second consolidated information in the *corpus2 (placei)* is *placei,* and each second consolidated information in the *corpus2 (placei)* is triad information which may be represented by *<count, countentNew, datetime>.*

In step 20332, with regard to any third target encrypted information block, the server acquires the number of the encrypted information consolidated by any second consolidated information in the third target encrypted information block, and then if the number of the encrypted information consolidated by the second consolidated information is greater than a first threshold, forms the information contents corresponding to the second consolidated information, the number of the encrypted information consolidated by the second consolidated information and the latest receiving time of the second consolidated information into one entry.

In order to ensure the accuracy of the mined information templates, with regard to any third target encrypted information block, the server may preset a first threshold which may be 10, 20, 30 or the like, so as to mine the information templates from the target encrypted information block on the basis of a frequent subsequence mining method. During this process, the server may compare the number of the encrypted information consolidated by any second consolidated information in the third target encrypted information block with the territory threshold, and if the number of the encrypted information consolidated by the second consolidated information is greater than the first threshold, forms the information contents corresponding to the second consolidated information, the number of the encrypted information consolidated by the second consolidated information and the latest receiving time of the third target encrypted information block into one entry, and the entry may be indicated by *<pat, c2, latestDatetime2>,* wherein *pat* refers to the information contents, *c2* refers to the number of the information consolidated by the second consolidated information, and *latestDatetime2* refers to the latest receiving time of the second consolidated information.

In step 20333, the server consolidates multiple entries having the same information contents in the third target encrypted information block to obtain one information template, the number of the applicable encrypted information of the information template being a sum of the number of the encrypted information consolidated by the multiple entries, and the receiving time of the information template being the latest receiving time of the multiple entries.

The server consolidates multiple entries having the same information contents in the third target encrypted information block to obtain one information template, the number of the applicable encrypted information of the information template being the sum of the number of the encrypted information consolidated by the multiple entries, and the receiving time of the information template being the latest receiving time of the multiple entries.

It should be illustrated that the foregoing is explained by clustering any third target encrypted information block to obtain one information template. The process of clustering other third target encrypted information block to obtain the information templates may be referred to the foregoing step 2033, and will not be elaborated in the embodiment.

It may be seen from the foregoing steps 201 to 203 that the process of mining the information template in the embodiments of the present disclosure is substantively a process of abstracting middle templates and covering such privacy information therein like name of people, name of place, or the like, as well as such numerical information as bank card number, mobile phone number or the like. Taking the mining the information template for the short message 1, the short message 2 and the short message 3 in the foregoing step 2024 for an example, employing the method provided by the embodiments of the present disclosure may obtain the following information template:

[Bank] Dear Mr/Miss <*>, you have changed your original mobile phone number (tail number *<Number>*) into mobile phone number (tail number *<Number>*) on *<Time>,* please use the new mobile phone number to transact e-banking business, and please call *<PhoneNumber>* in case of any query.

In step 204, the server verifies a coverage rate of each information template.

Generally, the privacy information of the user can be completely shielded in the template through the foregoing process of mining the information template. However, to prevent that the privacy information of the user is not completely shielded in the information template due to a program bug, the method provided by the embodiment will also validate the coverage rate of all the mined information templates. The validating the coverage rate refers to calculating the coverage ratio of the information template in the test information set, i.e., the ratio of the number of matched information to all the information.

With regard to the triad *<pat, c2, latestDatetime2>* of each information template, in theory, the minimum coverage rate of each information template in the information to be processed in the corresponding *corpus2* (*placei*) is *c*, it is given that the information to be processed included in *corpus2 (placei)* is *N,* then the coverage rate of *pat* in *corpus2* (*placei*) is: *rate=c*/*N.*

Usually, the expected value of the coverage rate of the mined information template *pat* in other information set will also be *rate,* and the expected value will have a fluctuation of ε generally. That is, the expected value of the coverage rate of the information template *pat* in other information set will usually be between [*rate-*ε, *rate*+ε]*.* For the *pat* having a coverage rate between [0, *rate*-ε)*,* it may be deleted from the corresponding information template because the coverage rate is relatively small. A coverage number threshold *m* is given, and the *pat* having a coverage number less than *m* may be deleted from the corresponding information template, so that the coverage rate of the actual information template is between [*rate*-ε, 1] and has a certain absolute coverage number.

It should be illustrated that the process of mining the information template is the process of concluding an information template from the information to be processed, while the process of verifying the coverage rate is the process of using the template to match the test information. The two are contrary processes, which can ensure that the mined information template does not include the privacy information of the user from positive and negative aspects. Moreover, there is no intersection between the information set used in the process of verifying the coverage rate and the information set used in the process of mining the template, which are both randomly extracted from the original information set. The two groups of different information sets having similar distributions further ensure that the mined information template does not include the privacy information of the user.

Exemplarily, the following steps 2041∼2043 may be employed while the server validates the coverage rate of each information template.

In step 2041, the server acquires a test information set, the test information set including multiple test information.

In order to improve the accuracy of the verification result, the server will acquire a second preset number of information to be processed from the remaining information to be processed in the information set corresponding to the sending end identity of the information to be processed, and form the second preset number of information to be processed into a test information set. The second preset number may be 100, 200 or 300, or the like, and the second preset number will not be concretely defined in the embodiment.

In step 2042, the server respectively processes the multiple test information to obtain multiple first test information blocks.

The following steps 20421∼20423 may be employed when the server respectively processes the multiple test information to obtain the multiple first test information blocks.

In step 20421, the server respectively encrypts the multiple test information to obtain multiple encrypted test information.

The following steps 204211∼204213 may be employed when the server encrypts the multiple test information to obtain the multiple encrypted test information.

In step 204211, the server, with regard to any test information, acquires the territory identity of the test information according to a receiving end identity of the test information.

Usually, different service providers use different information templates in different positions or regions with respect to different region features. Because the receiving end identity may position the positions or regions of different users, the server may acquire the territory identity of the test information according to the receiving end identity of the test information. In the present embodiment, the territory identity may be represented by *place,* and the corresponding territory identities (*place*) are different when the territory positions are different, for instance, the territory identity of Beijing is *"beijing",* and the territory identity of Shanghai is "*shanghai*" or the like.

In step 204212, the server encrypts the receiving end identity of the test information to obtain a first feature code of the test information.

The server, while encrypting the receiving end identity of the test information, may employ a preset encryption algorithm for encryption, the preset encryption algorithm being determined by the server. A cipher text corresponding to the receiving end identity of the test information may be acquired through encrypting the receiving end identity of the test information using the preset encryption algorithm, the cipher text being also called the first feature code. In the present embodiment, the first feature code may also be represented by *ciphertext,* and different receiving end identities have different *ciphertext,* for instance, the *ciphertext* of a receiving end identity 123456 is *a,* and the *ciphertext* of a receiving end identity 258369 is *c*, or the like.

It should be noted that the first feature codes obtained by encrypting different receiving end identities using the preset encryption algorithm are different, and the first feature code corresponding to each receiving end identity is unique; that is, the receiving end identity and the first feature code are in one to one correspondence.

In step 204213, the server forms the territory identity of the test information, the first feature code and the information contents of the test information into one encrypted test information.

The server forms the territory identity of the test information, the first feature code and the information contents of the test information into one encrypted information. In the present embodiment, the information contents of the test information may be represented by *content.* At this moment, the encrypted test information may be triad information that can be represented by *<place, ciphertext, content>.*

It should be illustrated that taking the foregoing encrypting any test information in the test information set for example, the process of encrypting other test information is identical to the process of encrypting the test information during practical application. Please refer to the foregoing process of encrypting the test information for details, and the process will not be elaborated herein.

In step 20422, the sever respectively consolidates the encrypted test information satisfying a third consolidation condition in the multiple encrypted test information to obtain multiple third consolidated information.

During specific implementation, the following steps 204221∼204223 may be employed for the server to consolidate the multiple encrypted test information to obtain the multiple third consolidated information.

In step 204221, the server acquires multiple second test information blocks from the multiple encrypted test information, the encrypted test information in each second test information block having the same territory identity and information contents.

Because each encrypted test information may be represented into the triad information composed of the territory identity, the first feature code and the information contents of the test information, the server may acquire the encrypted test information having the same territory identity and information contents according to the triad representation form of each encrypted test information, and form the encrypted information block having the same territory identity and information contents into the second test information block.

For example, the server acquires multiple encrypted test information, wherein encrypted test information 1 is *<beijing, a, content 1>*, encrypted test information 2 is *<beijing, b, content 1>*, encrypted test information 3 is *<beijing, c, content 1>*, encrypted test information 4 is *<tianjin, d, content 2>,* and encrypted test information 5 is *<tianjin, c, content 2>.* The server forms the encrypted test information 1, the encrypted test information 2 and the encrypted test information 3 having the territory identity of *beijing* and the information contents of *content 1* into one second test information block; and forms the encrypted information 4 and the encrypted information 5 having the territory identity of *tianjin* and the information contents of *content 2* into another second test information block.

In step 204222, the server acquires the number of the encrypted test information in any second test information block.

The number of the encrypted test information in the second test information block may be 2, 3 or the like, and the number of the encrypted test information in the second test information block will not be concretely defined in the embodiment. In the present embodiment, the number of the encrypted test information in the second test information block may be represented by *c3.*

In step 204223, the server forms the territory identity of the second test information block, the number of the encrypted test information in the second test information block and the information contents of the second test information block into one consolidated test information.

Each second consolidated information is triad information that may be represented by *<place, c3, content>.*

It should be illustrated that the foregoing is explained by combining the encrypted test information in any second test information block. The process of combining the encrypted test information in other second test information block may be referred to the foregoing process of combining the encrypted test information in any second test information block, and will not be elaborated herein.

In order to facilitate managing the consolidated test information, the server also forms the multiple consolidated test information into one set *corpus3.*

In step 20423, the server divides the multiple third consolidated information into multiple first test information blocks, the third consolidated information in each first test information block having the same territory identity.

Usually, the information contents sent by the service providers to the users are different according to different territory features, and the information templates that can be validated by the server according to different information contents are certainly different. Therefore, in order to conduct a targeted information template validation, the server may divide the multiple third consolidated information into multiple first test information blocks, and the third consolidated information in each first test information block has the same territory identity. During specific implementation, the server may divide the set *corpus3* into n disjoint subsets according to the territory identity of the second consolidated information included in *corpus3,* for example, *validate corpus3* (*place1*), *validate corpus3* (*place2*), *validate corpus3* (*place3*),..., and *validate corpus3* (*placen*)*.* With regard to any *validate corpus3* (*placei*), the territory identity corresponding to each third consolidated information in the *validate corpus3* (*placei*) is *placei,* and each third consolidated information in the *validate corpus3* (*placei*) is triad information which may be represented by *<place, c4, content>,* wherein, *c4* is the number of the third consolidated information included in each first test information block.

In step 2043, the server validates a coverage rate of each information template according to the multiple first test information blocks.

The following steps 20431∼20432 may be employed when the server validates the coverage rate for each information template according to the multiple first test information blocks.

In step 20431, with regard to any information template, the server acquires the number of the information matched with the information template in each first test information block.

Taking any mined information template for an example, the server will also match the information template with each first test information block in the multiple first test information blocks. During matching, the template content of the information template may be matched with the information content of each third consolidated information included in each first test information; when the template content of the information template is identical to the information content of any third consolidated information included in any first test information or a similarity therebetween is greater than a specific value, the information template is determined to be matched with any third consolidated information included in any first test information. The number of the information of the information template matched with each first test information block in the multiple first test information blocks may be acquired through matching by using this manner.

With regard to the foregoing process, in order to facilitate understanding, detailed explanation and illustration will be given hereinafter by taking the matching between one information template and one first test information block as an example.

For example, the mined information template is "[Bank] Dear Mr/Miss <*>, you have changed your mobile phone number (tail number <Number>) into mobile phone number (tail number <Number>) on <Time>, please use the new mobile phone number to transact e-banking business, and please call <PhoneNumber> in case of any query." The test information included in the first test information block is respectively a short message 1, a short message 2, a short message 3, a short message 4 and a short message 5, wherein, the short message 1 is "[Bank] Dear Mr/Miss Fei LIU, you have changed your original mobile phone number (tail number 0102) into mobile phone number (tail number 0988) on August 21, 2014, please use the new mobile phone number to transact e-banking business, and please call 95580 in case of any query."; the short message 2 is "[Bank] Dear Mr/Miss Jie ZHZANG, you have changed your original mobile phone number (tail number 0209) into mobile phone number (tail number 8988) on July 13, 2014, please use the new mobile phone number to transact e-banking business, and please call 95580 in case of any query."; the short message 3 is "[Bank] Dear Mr/Miss Changjiang WANG, you have changed your original mobile phone number (tail number 0109) into mobile phone number (tail number 1234) on August 07, 2014, please use the new mobile phone number to transact e-banking business, and please call 95580 in case of any query."; the short message 4 is "Dear customer, you can avoid inputting ID card number or card No. by calling using the mobile phone 186 (tail number 1234) obligated in the system to prevent tedious operation and enjoy simple life."; and the short message 5 is "Dear customer, your order bill 10142389122 has been delivered and is on the way of shipping, please wait patiently. Our shopping mall will not initiatively ask you to provide your bank card information to operate for refunding by the reason of invalid order bill, please beware of fraud!". When the information template is matched with the five short messages in the first test information block, it may be found that the short message 1, the short message 2 and the short message 3 are matched with the information template, while the short message 4 and the short message 5 are not matched with the information template.

In step 20432, if the number of the information matched with any first test information block by the information template is greater than a second threshold, then the server acquires the ratio of the number of the matched information to the number of the test information included in the first test information block.

The second threshold may be 3, 5, 8, or the like, and the second threshold will not be specifically defined in the embodiment. When the number of the information matched with any first test information block by the information template is greater than the second threshold, the server will also acquire the ratio of the number of the matched information to the number of the test information included in the first test information block. For example, the number of the information matched with any first test information block by the information template is t, and the number of the test information included in the first test information block is *o*, then it may be acquired that the ratio of the number of the matched information to the number of the test information included in the first test information block *=t*/*o.*

For example, when matching the information template with any first test information block, the server acquires that the number of the information matched with the first test information block by the information template is 100; if the second threshold is set to be 120, then the server may acquire that the ratio of the number of the matched information to the number of the test information included in the first test information block is 100/120=83.3%.

In step 205, the server determines an actual information template from the at least one information template according to the verification result.

When the method according to the foregoing step 204 is employed to validate any mined information template, if the ratio of the number of the matched information to the number of the test information included in the first test information block is within a preset range, this information template may be determined as the actual information template, wherein, the preset range may be [50%, 100%], [70%, 100%] or the like, and the preset range will not be specifically defined in the embodiment.

Moreover, in order to ensure 100% privacy information of the user, after verifying the coverage rate of the information template, the server will also provide the validated actual information template to auditing staff for manual auditing, and only when the information template passes the auditing, provides the information template to relevant technicians for use.

According to the method provided by the embodiments of the present disclosure, the information template is mined through studying the multiple modeling information, and the numerical information included in the modeling information is encrypted during the template mining process, which prevents user privacy from being disclosed by the mined template, so that a more scientific method for mining an information template is provided.

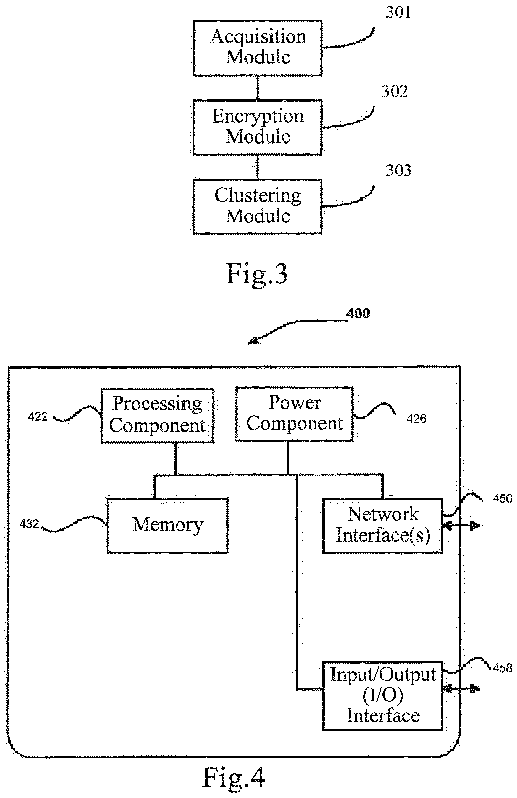

Fig. 3 is a structure diagram illustrating a device for mining an information template, according to an exemplary embodiment. Referring to Fig. 3, the device includes an acquisition module 301, an encryption module 302 and a clustering module 303.

The acquisition module 301 is configured to acquire a modeling information set, the modeling information set including multiple modeling information.

The encryption module 302 is configured to respectively encrypt numerical information included in the multiple modeling information to obtain multiple encrypted information.

The clustering module 303 is configured to cluster the multiple encrypted information to obtain at least one information template.

Optionally, the acquisition module 301 is configured to acquire multiple information to be processed, each information to be processed at least including a sending end identity; divide the multiple information to be processed into different information sets, the information to be processed in each information set having the same sending end identity; acquire a first preset number of information to be processed from the corresponding information set according to the sending end identity of any information to be processed; and compose the first preset number of information to be processed into the modeling information set.

Optionally, the encryption module 302 is configured to, with regard to any modeling information, acquire the territory identity of the modeling information according to a receiving end identity of the modeling information; encrypt the receiving end identity of the modeling information to obtain a first feature code of the modeling information; encrypt the numerical information in the modeling information according to a type of the numerical information included in the modeling information to obtain a second feature code of the modeling information; and compose the territory identity, the first feature code, the second feature code and the receiving time of the modeling information into one encrypted information.

Optionally, the clustering module 303 is configured to respectively consolidate the encrypted information satisfying a first consolidation condition in the multiple encrypted information to obtain multiple first consolidated information; respectively consolidate the encrypted information satisfying a second consolidation condition in the multiple first consolidated information to obtain multiple second consolidated information; and cluster the multiple second consolidated information to obtain at least one information template.

Furthermore, the clustering module 303 is optionally configured to acquire multiple first target encrypted information blocks from the multiple encrypted information, the encrypted information in each first target encrypted information block having the same territory identity, first feature code and second feature code; sequence the encrypted information in any first target encrypted information block according to the receiving time in a descending order (i.e., from most recent to least recent); and save the encrypted information in the first target encrypted information block having the latest receiving time and delete remaining encrypted information in the first target encrypted information block to obtain one first consolidated information.

Optionally, the clustering module 303 is configured to acquire multiple second target encrypted information blocks from the multiple first consolidated information, the first consolidated information in each second target encrypted information block having the same territory identity and second feature code; with regard to any second target encrypted information block, acquire the number of the first consolidated information in the second target encrypted information block and the latest receiving time of the first consolidated information in the second target encrypted information block; and compose the territory identity of the second target encrypted information block, the number of the first consolidated information in the second target encrypted information block, the second feature code of the second target encrypted information block and the latest receiving time of the first consolidated information in the second target encrypted information block into one second consolidated information.

Optionally, the clustering module 303 is configured to divide the multiple second consolidated information into multiple third target encrypted information blocks, the second consolidated information in each third target encrypted information block having the same territory identity; with regard to any third target encrypted information block, acquire the number of the first consolidated information consolidated by any second consolidated information in the third target encrypted information block, and then compose the information contents corresponding to the second consolidated information, the number of the first consolidated information consolidated by the second consolidated information and the latest receiving time of the third target encrypted information block into one entry when the number of the first consolidated information consolidated by the second consolidated information is greater than a first threshold; and consolidate multiple entries having the same information contents in the third target encrypted information block to obtain one information template, the number of the applicable encrypted information of the information template being the sum of the number of the encrypted information consolidated by the multiple entries, and the receiving time of the information template being the latest receiving time of the multiple entries.

Optionally, the device further includes a verification module and a determination module. The verification module is configured to verify the coverage rate for each information template. The determination module is configured to determine an actual information template from the at least one information template according to the verification result.

Optionally, the verification module is configured to acquire a test information set, the test information set including multiple test information; respectively process the multiple test information to obtain multiple first test information blocks; and verify a coverage rate of each information template according to the multiple first test information blocks.

Optionally, the verification module is configured to acquire a second preset number of information to be processed from the remaining information to be processed in the information set corresponding to the sending end identity of the information to be processed, so as to obtain the test information set.

Optionally, the verification module is configured to respectively encrypt the multiple test information to obtain multiple encrypted test information; respectively consolidate the encrypted test information satisfying a third consolidation condition in the multiple encrypted test information to obtain multiple third consolidated information; and divide the multiple third consolidated information into multiple first test information blocks, the third consolidated information in each first test information block having the same territory identity.

Optionally, the verification module is configured to, with regard to any test information, acquire the territory identity of the test information according to the receiving end identity of the test information; encrypt the receiving end identity of the test information to obtain a first feature code of the test information; and compose the territory identity of the test information, the first feature code and the information contents of the test information into one encrypted test information.

Optionally, the verification module is configured to acquire multiple second test information blocks from the multiple encrypted test information, the encrypted test information in each second test information block having the same territory identity and information contents; acquire the number of the encrypted test information in any second test information block; and compose the territory identity of the second test information block, the number of the encrypted test information in the second test information block and the information contents of the second test information block into one consolidated test information.

Optionally, the verification module is configured to, with regard to any information template, acquire the number of the information matched with the information template in each first test information block; and when the number of the information matched with any first test information block by the information template is greater than a second threshold, acquire the ratio of the number of the matched information to the number of the test information included in the first test information block.

Optionally, the determination module is configured to, when the ratio of the number of the matched information to the number of the test information included in the first test information block is within a preset range, determine the information template to be the actual information template.

According to the device provided by the embodiments of the present disclosure, the information template is mined through studying the multiple modeling information, and the numerical information included in the modeling information is encrypted during the template mining process, which prevents user privacy from being disclosed by the mined template, so that a more scientific method for mining an information template is provided.

With respect to the devices in the above embodiments, the specific manners for performing operations for individual modules therein have been described in detail in the embodiments regarding the methods, which will not be elaborated herein.

Fig. 4 is a block diagram illustrating a device 400 for mining an information template, according to an exemplary embodiment. For example, the device 400 may be provided as a server. Referring to Fig. 4, the device 400 includes a processing component 422 that further includes one or more processors, and memory resources represented by a memory 432 for storing instructions executable by the processing component 422, such as application programs. The application programs stored in the memory 432 may include one or more modules each corresponding to a set of instructions.

Further, the processing component 422 is configured to execute the instructions to perform the above method for mining an information template: acquiring a modeling information set, the modeling information set including multiple modeling information; respectively encrypting numerical information included in the multiple modeling information to obtain multiple encrypted information; and clustering the multiple encrypted information to obtain at least one information template.

Optionally, the acquiring the modeling information set includes: acquiring multiple information to be processed, each information to be processed at least including a sending end identity; dividing the multiple information to be processed into different information sets, the information to be processed in each information set having the same sending end identity; acquiring a first preset number of information to be processed from the corresponding information set according to the sending end identity of any information to be processed; and composing the first preset number of information to be processed into the modeling information set.

Optionally, the respectively encrypting the numerical information included in the multiple modeling information to obtain the multiple encrypted information includes: with regard to any modeling information, acquiring the territory identity of the modeling information according to the receiving end identity of the modeling information; encrypting the receiving end identity of the modeling information to obtain a first feature code of the modeling information; encrypting the numerical information in the modeling information according to the type of the numerical information included in the modeling information to obtain a second feature code of the modeling information; and composing the territory identity, the first feature code, the second feature code and the receiving time of the modeling information into one encrypted information.

Optionally, the clustering the multiple encrypted information to obtain the at least one information template includes:

respectively consolidating the encrypted information satisfying a first consolidation condition in the multiple encrypted information to obtain multiple first consolidated information; respectively consolidating the encrypted information satisfying a second consolidation condition in the multiple first consolidated information to obtain multiple second consolidated information; and clustering the multiple second consolidated information to obtain at least one information template.

Optionally, the respectively consolidating the encrypted information satisfying the first consolidation condition in the multiple encrypted information to obtain the multiple first consolidated information includes:acquiring multiple first target encrypted information blocks from the multiple encrypted information, the encrypted information in each first target encrypted information block having the same territory identity, first feature code and second feature code; sequencing the encrypted information in any first target encrypted information block according to receiving time from most recent to least recent; and saving the encrypted information in the first target encrypted information block having the latest receiving time and deleting remaining encrypted information in the first target encrypted information block so as to obtain one first consolidated information.

Optionally, the respectively consolidating the encrypted information satisfying the second consolidation condition in the multiple first consolidated information to obtain the multiple second consolidated information includes: acquiring multiple second target encrypted information blocks from the multiple first consolidated information, the first consolidated information in each second target encrypted information block having the same territory identity and second feature code; with regard to any second target encrypted information block, acquiring the number of the first consolidated information in the second target encrypted information block and the latest receiving time of the first consolidated information in the second target encrypted information block; and composing the territory identity of the second target encrypted information block, the number of the first consolidated information in the second target information block, the second feature code of the second target encrypted information block and the latest receiving time of the first consolidated information in the second target encrypted information block into one second consolidated information.

Optionally, the clustering the multiple second consolidated information to obtain at least one information template includes: dividing the multiple second consolidated information into multiple third target encrypted information blocks, the second consolidated information in each third target encrypted information block having the same territory identity; with regard to any third target encrypted information block, acquiring the number of the first consolidated information consolidated by any second consolidated information in the third target encrypted information block, and then composing the information contents corresponding to the second consolidated information, the number of the first consolidated information consolidated by the second consolidated information and the latest receiving time of the third target encrypted information block into one entry if the number of the first consolidated information consolidated by the second consolidated information is greater than a first threshold; and consolidating multiple entries having the same information contents in the third target encrypted information block to obtain one information template, the number of the applicable encrypted information of the information template being a sum of the number of the encrypted information consolidated by the multiple entries, and the receiving time of the information template being the latest receiving time of the multiple entries.

Optionally, the method, after the clustering the multiple encrypted information to obtain at least one information template, further includes: verifying a coverage rate of each information template; and determining an actual information template from the at least one information template according to the verification result.

Optionally, the verifying the coverage rate of each information template includes: acquiring a test information set, the test information set including multiple test information; respectively processing the multiple test information to obtain multiple first test information blocks; and verifying the coverage rate of each information template according to the multiple first test information blocks.

Optionally, the acquiring the test information set includes: acquiring a second preset number of information to be processed from the remaining information to be processed in the information set corresponding to the sending end identity of the information to be processed to obtain the test information set.

Optionally, the respectively processing the multiple test information to obtain the multiple first test information blocks includes: respectively encrypting the multiple test information to obtain multiple encrypted test information; respectively consolidating the encrypted test information satisfying a third consolidation condition in the multiple encrypted test information to obtain multiple third consolidated information; and dividing the multiple third consolidated information into multiple first test information blocks, the third consolidated information in each first test information block having the same territory identity.

Optionally, the encrypting the multiple test information to obtain the multiple encrypted test information includes: with regard to any test information, acquiring the territory identity of the test information according to a receiving end identity of the test information; encrypting the receiving end identity of the test information to obtain a first feature code of the test information; and composing the territory identity of the test information, the first feature code and the information contents of the test information into one encrypted test information.

Optionally, the consolidating the multiple encrypted test information to obtain the multiple third consolidated information includes: acquiring multiple second test information blocks from the multiple encrypted test information, the encrypted test information in each second test information block having the same territory identity and information contents; acquiring the number of the encrypted test information in any second test information block; and composing the territory identity of the second test information block, the number of the encrypted test information in the second test information block and the information contents of the second test information block into one consolidated test information.

Optionally, the verifying the coverage rate of each information template according to the multiple first test information blocks includes: with regard to any information template, acquiring the number of the information matched with the information template in each first test information block; and if the number of the information matched with any first test information block by the information template is greater than a second threshold, acquiring a ratio of the number of the matched information to the number of the test information included in the first test information block.

Optionally, the determining the actual information template from the at least one information template according to the verification result includes: if the ratio of the number of the matched information to the number of the test information included in the first test information block is within a preset range, determining the information template to be the actual information template.

The device 400 may also include a power component 426 configured to perform power management of the device 400, wired or wireless network interface(s) 450 configured to connect the device 400 to a network, and an input/output (I/O) interface 458. The device 400 may operate based on an operating system stored in the memory 432, such as

Windows ServerTM, Mac OS XTM, UnixTM, LinuxTM, FreeBSDTM, or the like.

According to the device provided by the embodiments of the present disclosure, the information template is mined through studying the multiple modeling information, and the numerical information included in the modeling information is encrypted during the template mining process, which prevents user privacy from being disclosed by the mined template, so that a more scientific method for mining an information template is provided.

## Claims

1. A method for mining an information template, comprising:
acquiring (101, 201) a modeling information set, the modeling information set comprising multiple modeling information;
respectively encrypting (102, 202) numerical information comprised in the multiple modeling information to obtain multiple encrypted information; and
clustering (103, 203) the multiple encrypted information to obtain at least one information template.

2. The method according to claim 1, wherein the acquiring (101, 201) the modeling information set comprises:
acquiring multiple information to be processed, each information to be processed at least comprising a sending end identity;
dividing the multiple information to be processed into different information sets, the information to be processed in each information set having the same sending end identity;
acquiring a first preset number of information to be processed from the corresponding information set according to the sending end identity of any information to be processed; and
composing the first preset number of information to be processed into the modeling information set.

3. The method according to claim 1, wherein the respectively encrypting (102, 202) the numerical information comprised in the multiple modeling information to obtain the multiple encrypted information comprises:
with regard to any modeling information, acquiring a territory identity of the modeling information according to an receiving end identity of the modeling information;
encrypting the receiving end identity of the modeling information to obtain a first feature code of the modeling information;
encrypting the numerical information in the modeling information according to a type of the numerical information comprised in the modeling information to obtain a second feature code of the modeling information; and
composing the territory identity, the first feature code, the second feature code and a receiving time of the modeling information into one encrypted information.

4. The method according to claim 1, wherein the clustering (103, 203) the multiple encrypted information to obtain at least one information template comprises:
respectively consolidating the encrypted information satisfying a first consolidation condition among the multiple encrypted information to obtain multiple first consolidated information;
respectively consolidating the encrypted information satisfying a second consolidation condition among the multiple first consolidated information to obtain multiple second consolidated information; and
clustering the multiple second consolidated information to obtain at least one information template.

5. The method according to claim 4, wherein the respectively consolidating the encrypted information satisfying the first consolidation condition among the multiple encrypted information to obtain the multiple first consolidated information comprises:
acquiring multiple first target encrypted information blocks from the multiple encrypted information, the encrypted information in each first target encrypted information block having the same territory identity, first feature code and second feature code;
sequencing the encrypted information in any first target encrypted information block according to the receiving time from most recent to least recent; and
saving the encrypted information in the first target encrypted information block having the latest receiving time and deleting the remaining encrypted information in the first target encrypted information block to obtain one first consolidated information.

6. The method according to claim 4, wherein the respectively consolidating the encrypted information satisfying the second consolidation condition among the multiple first consolidated information to obtain the multiple second consolidated information comprises:
acquiring multiple second target encrypted information blocks from the multiple first consolidated information, the first consolidated information in each second target encrypted information block having the same territory identity and second feature code;
with regard to any second target encrypted information block, acquiring the number of the first consolidated information in the second target encrypted information block and the latest receiving time of the first consolidated information in the second target encrypted information block; and
composing the territory identity of the second target encrypted information block, the number of the first consolidated information in the second target encrypted information block, the second feature code of the second target encrypted information block and the latest receiving time of the first consolidated information in the second target encrypted information block into one second consolidated information.

7. The method according to claim 4, wherein the clustering the multiple second consolidated information to obtain at least one information template comprises:
dividing the multiple second consolidated information into multiple third target encrypted information blocks, the second consolidated information in each third target encrypted information block having the same territory identity;
with regard to any third target encrypted information block, acquiring the number of the first consolidated information consolidated by any second consolidated information in the third target encrypted information block, and if the number of the first consolidated information consolidated by the second consolidated information is greater than a first threshold, composing information contents corresponding to the second consolidated information, the number of the first consolidated information consolidated by the second consolidated information and the latest receiving time of the third target encrypted information block into one entry; and
consolidating multiple entries having the same information contents in the third target encrypted information block to obtain one information template, the number of the encrypted information applicable to the information template being a sum of the number of the encrypted information consolidated by the multiple entries, and the receiving time of the information template being the latest receiving time of the multiple entries.

8. The method according to any preceding claim, wherein after clustering (103, 203) the multiple encrypted information to obtain at least one information template, the method further comprises:
verifying (204) a coverage rate for each information template; and
determining (205) an actual information template from the at least one information template according to the verification result.

9. The method according to claim 8, wherein the verifying (204) the coverage rate for each information template comprises:
acquiring a test information set, the test information set comprising multiple test information;
respectively processing the multiple test information to obtain multiple first test information blocks; and
verifying the coverage rate for each information template according to the multiple first test information blocks;
wherein the acquiring the test information set preferably further comprises acquiring a second preset number of information to be processed from the remaining information to be processed in the information set corresponding to the sending end identity of the information to be processed to obtain the test information set.

10. The method according to claim 9, wherein the respectively processing the multiple test information to obtain the multiple first test information blocks comprises:
encrypting the multiple test information to obtain multiple encrypted test information;
respectively consolidating the encrypted test information satisfying a third consolidation condition among the multiple encrypted test information to obtain multiple third consolidated information; and
dividing the multiple third consolidated information into multiple first test information blocks, the third consolidated information in each first test information block having the same territory identity;
wherein the encrypting the multiple test information to obtain the multiple encrypted test information preferably comprises:
with regard to any test information, acquiring the territory identity of the test information according to an receiving end identity of the test information;
encrypting the receiving end identity of the test information to obtain a first feature code of the test information; and
composing the territory identity of the test information, the first feature code and information contents of the test information into one encrypted test information.

11. The method according to claim 10, wherein the consolidating the multiple encrypted test information to obtain the multiple third consolidated information comprises:
acquiring multiple second test information blocks from the multiple encrypted test information, the encrypted test information in each second test information block having the same territory identity and information contents;
acquiring the number of the encrypted test information in any second test information block; and
composing the territory identity of the second test information block, the number of the encrypted test information in the second test information block and the information contents of the second test information block into one consolidated test information.

12. The method according to any of claims 9 to 11, wherein the verifying the coverage rate for each information template according to the multiple first test information blocks comprises:
with regard to any information template, acquiring the number of information matched with the information template in each first test information block; and
if the number of the information matched with any first test information block by the information template is greater than a second threshold, acquiring a ratio between the number of the matched information and the number of the test information comprised in the first test information block; and wherein the determining (205) the actual information template from the at least one information template according to the verification result preferably comprises: if the ratio between the number of the matched information and the number of the test information comprised in the first test information block is within a preset range, determining the information template to be the actual information template.

13. A device for mining an information template, comprising:
an acquisition module (301) configured to acquire a modeling information set, the modeling information set comprising multiple modeling information;
an encryption module (302) configured to respectively encrypt numerical information comprised in the multiple modeling information to obtain multiple encrypted information; and
a clustering module (303) configured to cluster the multiple encrypted information to obtain at least one information template.

14. The device according to claim 13, wherein the acquisition module (301) is configured to acquire multiple information to be processed, each information to be processed at least comprising a sending end identity; to divide the multiple information to be processed into different information sets, the information to be processed in each information set having the same sending end identity; to acquire a first preset number of information to be processed from the corresponding information set according to the sending end identity of any information to be processed; and to compose the first preset number of information to be processed into the modeling information set.

15. The device according to claim 13, wherein the encryption module (302) is configured to, with regard to any modeling information, acquire a territory identity of the modeling information according to a receiving end identity of the modeling information; to encrypt the receiving end identity of the modeling information to obtain a first feature code of the modeling information; to encrypt the numerical information in the modeling information according to a type of the numerical information comprised in the modeling information to obtain a second feature code of the modeling information; and to compose the territory identity, the first feature code, the second feature code and receiving time of the modeling information into one encrypted information.

16. The device according to claim 13, wherein the clustering module (303) is configured to respectively consolidate the encrypted information satisfying a first consolidation condition among the multiple encrypted information to obtain multiple first consolidated information; to respectively consolidate the encrypted information satisfying a second consolidation condition among the multiple first consolidated information to obtain multiple second consolidated information; and to cluster the multiple second consolidated information to obtain at least one information template.

17. A computer program, which when executed on a processor of a server, performs a method according to any one of claims 1 to 12.
